# EUROPÄISCHE PATENTSCHRIFT

(11) **EP 2 227 377 B1**
(45) Veröffentlichungstag und Bekanntmachung des Hinweises auf die Patenterteilung: **04.04.2012**
(21) Anmeldenummer: 07847783.3
(22) Anmeldetag: 04.12.2007
(51) Int. Cl.: B29C 70/44

(54) **VERFAHREN ZUR HERSTELLUNG EINES MEHRZELLIGEN FAHRZEUGCHASSIS UND DADURCH HERGESTELLTES FAHRZEUGCHASSIS**
METHOD FOR PRODUCING A VEHICLE CHASSIS WITH MULTIPLE CAVITIES AND VEHICLE CHASSIS OBTAINED THEREBY
PROCÉDÉ POUR PRODUIRE UN CHÂSSIS DE VÉHICULE À CAVITÉS MULTIPLES ET CHÂSSIS DE VEHICULE AINSI OBTENU

(30) Priorität: 02.12.2007 CH 18672007
(43) Veröffentlichungstag der Anmeldung: 15.09.2010
(73) Patentinhaber: Mubea Carbo Tech GmbH, 5020 Salzburg (AT)
(72) Erfinder: HIMMLER, Florian, A-5084 Grossgmain (AT); WAGNER, Karl, A-5020 Salzburg (AT)
(74) Vertreter: Rentsch Partner AG
(86) Internationale Anmeldenummer: PCT/EP2007/063282
(87) Internationale Veröffentlichungsnummer: WO 2009/071118

(56) Entgegenhaltungen:
- EP-A- 0 408 161
- WO-A-98/51480
- DE-A1- 10 301 044
- NL-A- 8 800 301
- US-A- 3 937 781
- US-A- 4 573 707
- US-A- 5 853 651
- US-A1- 2005 206 043
- US-A1- 2007 102 100
- US-A1- 2007 207 323

## Beschreibung

Die Erfindung liegt auf dem Gebiet der Faserverbundtechnologie und betrifft ein Verfahren und eine Vorrichtung zur Herstellung von Bauteilen aus Faserverbundwerkstoffen (faserverstärkten Kunststoffen), insbesondere hohle Teile oder Teile mit Hinterschnitten.

Verfahren zur Herstellung von Faserverbundbauteilen sind seit längerem bekannt, eignen sich jedoch nur beschränkt zur Herstellung von Hohlkörpern. Diese Verfahren sind daher auf die Herstellung von schalenförmigen, offenen Bauteilen gerichtet, die keine Hinterschnitte aufweisen und einfach entformbar sind. Weiter sind Verfahren bekannt, bei denen Hilfsmittel verwendet werden, um Fasern gegen eine Wand einer Kavität zu pressen. Ebenso sind Verfahren bekannt, bei denen Hilfsschichten zum Einsatz kommen, die am Bauteil verbleiben oder wieder entfernt werden.

WO2006/122987 derselben Anmelderin betrifft ein Verfahren zur Herstellung eines Faserverbundbauteils. Dabei wird eine Folie z.B. mittels eines Tiefzieh- oder eines Blasformprozesses in einem ersten Werkzeug vorgeformt. Diese Folie kann ausserhalb des eigentlichen Produktionswerkzeuges mit Fasern belegt werden. Anschliessend wird die Folie mit den Fasern in das Produktionswerkzeug eingelegt, wo dann die Verbindung der Fasern mit dem sie umgebenden Harz stattfindet. Ein Vorteil dieses Verfahrens besteht darin, dass der Belegeprozess nicht innerhalb des Produktionswerkzeuges erfolgt, so dass dieses für den eigentlichen Produktionsprozess weiterhin zur Verfügung steht. Ebenfalls ist es nicht erforderlich, das Produktionswerkzeug abzukühlen, sondern es kann auf einer konstanten Temperatur gehalten werden.

Aus dem Stand der Technik ist das so genannte RTM-Verfahren bekannt, das zur Herstellung von offenen oder nur geringfügig hinterschnittigen Formteilen aus Duroplasten und Elasto-Elastomeren dient. Im Vergleich zum Pressen wird hierbei die Formmasse mittels Kolben von einer meist beheizten Vorkammer über Verteilerkanäle in die Kavität (Formnest) gepumpt, in welche die Fasern vorgängig eingelegt wurden. Nachteile dieses Verfahrens sind die langen Zykluszeiten und der durch das Aufheizen und Abkühlen der Form bedingte hohe Energieverbrauch. Speziell, wenn es um die Herstellung von hohlen und/oder hinterschnittigen Bauteilen geht, ist das herkömmliche aus dem Stand der Technik bekannte RTM-Verfahren nicht geeignet. Derartige Bauteile erfordern ein sehr aufwendiges, mehrteiliges Werkzeugkonzept.

Ferner ist zur Herstellung von Faserverbundbauteilen mit mehreren Zellen im Bauteil aus der NL 8800301 ein Verfahren bekannt, das für glasfaserverstärkte Werkstücken mit zwei oder mehr benachbarten Hohlräumen, bei welchen die Hohlräume durch gerade Trennwände von einander separiert sein sollen, geeignet ist, wie z. B. bei Masten von Yachten. Hierfür wird ein Formwerkzeug mit zwei Formhälften verwendet. Zunächst wird eine Faserschicht in eine Formhälfte eingelegt. Ferner werden zwei getrennte Gummischläuche mit weiterem Fasermaterial umwickelt. Die Gummischläuche mit dem Fasermaterial werden in die Formhälfte auf die darin befindliche Faserschicht gelegt. Das Formwerkzeug wird mit der zweiten Formhälfte verschlossen. Als Faserschichten können Gewebe verwendet werden, die mit Verstärkungsmaterial, wie Glas, Aramid, PPDT oder ähnlichem, verstärkt sind. Anschliessend wird der Druck in den Gummischläuchen mittels eines Kompressors erhöht, so dass sich die Gummischläuche ausdehnen. Dabei entsteht durch die Schläuche ein Formling mit zwei Hohlräumen, die von einer dazwischen liegenden im wesentlichen geraden, ebenen Fläche getrennt werden. Weiter wird ein flüssiger Duroplast zwischen die Formhälften und die Gummischläuche injiziert, wobei der Druck zum Injizieren etwas niedriger als der Druck in den Schläuchen ist. Verbleibende Luft im Zwischenraum zwischen Schläuchen und Formhälften wird durch eine Abgasanlage entfernt. Dann wird der Druck in den Schläuchen weiter erhöht und Wärme zugeführt, um das Fasermaterial auszuhärten. Letztlich wird der Druck auf Atmosphärendruck reduziert, die Formhälften werden geöffnet und das Endprodukt entnommen. Die Gummischläuche werden aus den Hohlräumen entnommen und können wieder verwendet werden. Als Fasern können auch Prepregs-Gewebe verwendet werden. Die Gummischläuche tragen nicht zur Formgebung des Werkstücks bei und werden unabhängig von einander mit Druck beaufschlagt.

Aus der US 4,573,707 ist ein Verfahren zur Herstellung von Fahrzeugrahmen bekannt, die aus Kompositplatikmaterial mit Faserverstärkung hergestellt werden. Es wird ein steifer Chassiskern zur Verfügung gestellt, dessen Struktur aus länglichen Streben und Querstreben besteht. Der Kern ist mit einer Haut aus Faser-verstärktem Plastik umgeben. Die Haut kann manuell oder durch Aufschmelzen oder Eintauchen aufgebracht werden. Es ist kein Formprozess innerhalb einer Kavität eines Formwerkzeugs vorgesehen.

Eine Aufgabe der Erfindung besteht darin ein Verfahren und eine Vorrichtung zur Herstellung eines zumindest bereichsweise hohlen oder hinterschnittigen Bauteils aus Faserverbundwerkstoffen zu zeigen.

Die Erfindung beruht in einer Ausführungsform auf dem Einsatz von geeigneten, dreidimensional vorgeformten, ein oder mehrlagigen zumindest bereichsweise hohlen Blaskernen, welche ausserhalb der eigentlichen Produktionsform einerseits als Belegewerkzeug für die zu verarbeitenden Trockenfasern und/oder Prepregs und andererseits während dem eigentlichen Verarbeitungsprozess bei dem die Fasern verbunden werden, als Druckmembran dienen. Gute Resultate werden erzielt, indem die Blaskerne durch Blasformen, Spritzgiessen oder ein äquivalentes Verfahren aus einem oder mehreren Teilen hergestellt werden. Die Blaskerne weisen mehrere miteinander wirkverbundene Kammern auf. Die Blaskerne sind vorzugsweise aus einem der Anwendung angepassten vergleichsweise dünnen Material hergestellt, das eine gewisse Eigenstabilität aufweist, so dass ein Belegen mit den zu verarbeitenden Fasern möglich wird. Die als Hilfswerkzeuge verwendeten Blaskerne werden in der Regel ausserhalb des Werkzeuges mit Fasern belegt, umwickelt oder umflochten. Bei Bedarf können sie zur Erhöhung der Stabilität der Struktur beim Belegen mit Druck beaufschlagt oder mit einem rinnfähigen Material, z.B. Sand, gefüllt werden, das dann wieder entfernt wird. Ebenfalls besteht die Möglichkeit sie temporär mit einer Hilfskonstruktion in Form von Stützen oder anderen Haltevorrichtungen zu verbinden, damit das Belegen mit Fasern vereinfacht wird.

Blaskerne werden effizient aus einem thermisch verformbaren Material hergestellt. Je nach Anwendungsgebiet eignen sich folgenden Materialien: Polypropylene (PP), Polyethylene Terephthalate (PET), Polycarbonate (PC), Polyamide (PA), Polymethylmethacrylat (PMMA), Polybutylenterephthalat (PBT, PBTP), Polyurethan (PUR), Acrylischen Folien. Je nach Material werden andere Herstellverfahren verwendet. Geeignet sind Blasformverfahren, bei denen flüssiger Kunststoff (z.B. PP) ringförmig aus einer Düse gepresst wird, so dass ein Schlauch entsteht. Dieser Schlauch wird, nachdem er eine gewisse Länge erreicht hat, am unteren Ende gequetscht und dann, nachdem er in eine dafür vorgesehene geschlossene Blasform eingebracht wurde, aufgeblasen. Zur Erhöhung der Haftfähigkeit der Fasern und der Hilfsstoffe (z.B. Kleber, usw.) an der Oberfläche des Blaskerns, kann die Innenwand der Kavität des Blaskerns eine raue oder strukturierte Oberfläche aufweisen, die beim Blasformen auf die Oberfläche des Blaskerns übertragen wird. Bei Bedarf kann ein Blaskern auch aus mehreren Teilen aufgebaut werden.

Hohle oder stark hinterschnittige Bauteile werden heute üblicherweise in der Prepreg-Technologie mittels Miniautoklav oder Autoklavenhärtung hergestellt. Mit diesem Verfahren können pro Werkzeug maximal vier Bauteile pro Arbeitstag hergestellt werden, da der manuell aufwendige Belegeprozess nur im abgekühlten Werkzeug stattfinden kann. Ein weiterer Nachteil besteht darin, dass die Oberflächenqualität vergleichsweise schlecht ist und eine zusätzliche Nachbearbeitung erfordert. Zudem eignen sich diese Verfahren nur beschränkt für eine Serienproduktion, da sie sehr zeitintensiv sind und hohe Werkzeugkosten erfordern. Im Unterschied dazu eignet sich das erfindungsgemässe Verfahren wesentlich besser für den Einsatz in der Serienproduktion und führt zu einer massiven Reduzierung der Werkzeugkosten um bis zu 30%. Durch die Verwendung eines Blaskernes als Belegewerkzeug kann zudem auf den Einsatz von Preform-Vorrichtungen weitgehend verzichtet werden.

Die Fasern können sehr effizient mittels eines optimierten, neuartigen RTM-Verfahrens miteinander verbunden werden. Dadurch wird es möglich hohle und/oder hinterschnittige Faserverbundbauteilen z.B. für Anwendungen im Automobilbereich herzustellen. Beim erfindungsgemässen RTM Verfahren (Resin Transfer Moulding) werden im Unterschied zum Stand der Technik trockene Fasern nicht in ein geöffnetes, mindestens zweiteiliges Produktionswerkzeug eingelegt, sondern auf einem erfindungsgemässen Blaskern aufgelegt oder temporär befestigt. Anschliessend werden die Fasern zusammen mit dem Blaskern in eine Kavität einer ein oder mehrteiligen Produktionsform eingebracht. Danach wird das Werkzeug geschlossen und eine Harz-Härter Mischung aus einer Misch- und Dosieranlage zwischen die Aussenwand der Kavität und des Blaskerns injiziert, derart, dass die Fasern durchtränkt werden. Durch das Erzeugen einer Druckdifferenz werden die Fasern gegen die Aussenwand der Kavität gepresst, so dass das im Wesentlichen durch die Fasern gebildete Bauteil seine endgültige Geometrie erhält. Die Druckdifferenz wird durch Befüllen des Blaskerns von aussen, z.B. mittels Pressluft erzeugt. Alternativ oder in Ergänzung kann der Blaskern mit einem definierten Volumen Gas befüllt und dann verschlossen werden. Durch ein Vakuumieren des Aussenbereichs wird ebenfalls erreicht, dass sich der Blaskern im Innern der Form ausdehnt und die Fasern so gegen die Aussenwand presst. Zusätzlicher Druck kann durch eine chemische Reaktion erzielt werden. Der Druck kann durch eine kleine Bohrung wieder abgelassen werden.

Durch Temperatureinfluss gelangt das injizierte Harz (z.B. Epoxy) beschleunigt zur Aushärtung. Ein Vorteil des erfindungsgemässen RTM-Verfahrens sind die serientaugliche Fertigung von hohlen und/oder hinterschnittigen Faserverbundbauteilen mittels kurzen Taktzeiten. Ein weiterer Vorteil besteht in der Möglichkeit, Bauteile mit komplexer Geometrie herzustellen und viele Funktionen in das Bauteil zu integrieren (z.B. Metalleinlegeteile als Verbindungselemente). Je nach Anwendungsgebiet und Bedarf können in demselben Stil auch offene schalenförmige Bauteile hergestellt werden, indem der Blaskern nur bereichsweise belegt wird. Weitere vorgeformte Hilfsschichten zwischen Blaskern und Fasern sind bei Bedarf möglich.

Mittels dem erfindungsgemässen Verfahren besteht die Möglichkeit, ein Bauteil so zu fertigen, dass alle äusseren Seiten des hohlen und/oder hinterschnittigen Faserverbundbauteils eine einwandfreie, durch die Werkzeugbeschaffenheit und den Fertigungsprozess definierte Oberflächenqualität aufweisen. Durch das erfindungsgemässe RTM-Verfahren besteht zudem die Möglichkeit das eigentliche Produktionswerkzeug isotherm zu betreiben, was sich vorteilhaft auf den Energieverbrauch und die Bauteilkosten auswirkt, da dieses nicht mehr abgekühlt und wieder aufgeheizt werden muss. Ebenfalls werden die Durchlaufzeiten infolge des isothermen Betriebs des Werkzeuges vorteilhaft beeinflusst.

Im Vergleich zum Stand der Technik werden beim erfindungsgemässen RTM-Verfahren bereits an einem Hilfskörper angebrachte, vorgeformte Fasergebilde (Preforms) zusammen mit dem Hilfskörper in das offene, gegebenenfalls warme Werkzeug gelegt. Der Vorteil liegt im Vergleich zum Stand der Technik in der wesentlich schnelleren Einbringung der Fasern in das Werkzeug, sowie der gegebenenfalls entfallenden Kühlung. Ebenfalls ist es erstmals möglich komplett geschlossene Bauteile herzustellen. Damit textiles Faserhalbzeug bei dreidimensional gekrümmten Bauteilen möglichst einfach in die Form eingebracht werden kann, ist es vorteilhaft, wenn die einzelnen Zuschnitte vorab zu einem Preform miteinander verbunden werden. Hierzu haben sich unter anderem folgende Verfahren als günstig erwiesen: a) Temperatureinwirkung und thermoplastische Binder; b) Vernähen oder Versticken der Zuschnitte (Lagen); c) manuelles Auftragen eines Sprühklebers.

Im Vergleich zu einem herkömmlichen RTM-Verfahren, bei dem ausschliesslich massive Werkzeuge verwendet werden, sowie keine hohlen oder nur geringfügig hinterschnittige Teile hergestellt werden können, ergeben sich zudem erhebliche Vorteile hinsichtlich des Werkzeugkonzepts. So können zum Beispiel Hinterschnitte im Bauteil weniger aufwendig abgebildet werden. Durch den Entfall des mehrteiligen Innenwerkzeuges verringern sich die Werkzeug-Gesamtkosten um rund 30 - 40 %.

Je nach Anwendungsgebiet können die Blaskerne (Hilfskörper) beim erfindungsgemässen Verfahren im Bauteil verbleiben oder z.B. durch eine schon bestehende oder nachträglich eingebrachte Öffnung wieder entfernt werden. Dabei ist das Material des Hilfskörpers, respektive die Beschichtung der Oberfläche so zu wählen, dass ein leichtes Lösen vom Bauteil möglich ist. Teile und Baugruppen können zu Beginn in das Werkzeug eingelegt und/oder nachträglich mit dem fertigen Bauteil, z.B. durch Verkleben, Verschweissen oder durch mechanische Befestigungen, verbunden werden.

Zur Herstellung der Preform ist es notwendig, die trockenen Fasern bzw. den Lagenaufbau auf einem im Wesentlichen der späteren Geometrie entsprechend vorgeformten, ausreichend stabilen Hilfskörper aufzubringen. Da der Hilfskörper unter Umständen im geschlossenen Bauteil verbleiben kann, ist es notwendig, dass sich dieser nicht nachteilig auf den späteren Verwendungszweck auswirkt. Gute Resultate werden mittels membranförmigen Hilfskörpern erzielt, die leicht und ausreichend dünnwandig sind, sowie sich bei Bedarf mittels einem Fluid und/oder einem rieselfähigen Feststoff, z.B. Sand, befüllen, respektive aufblasen lassen, so dass sie eine gewisse Formstabilität erreichen. Je nach Anwendungsgebiet werden Materialien für die Hilfskörper verwendet, die eine gewisse Dehnbarkeit aufweisen, so dass der Hilfskörper durch Beaufschlagung mit Druck vergrössert werden kann. Gut geeignet sind Hilfskörper die durch Blasformen, z.B. im Extrusionsblasverfahren, eines thermoplastischen Polymers hergestellt werden oder Hilfskörper die aus geklebtem oder genähtem Gewebe gefertigt sind. Durch spätere Druckbeaufschlagung dieser geschlossenen Membran werden die einzelnen Gewebelagen im Harz verpresst. Falls der Hilfskörper im Innern des Bauteils verbleiben soll, sollte eine dauerhafte Verklebung mit dem Bauteil gewährleistet sein, um ein Lösen während des Betriebs zu vermeiden.

Bei Bedarf können die als Hilfskörper dienenden Blaskerne vor oder während dem Belegen mit Faserhalbzeug oder dem Umwickeln mit endlosen Fasern zusätzlich beschichtet oder einer Oberflächenbehandlung unterzogen werden. Ebenfalls besteht die Möglichkeit, den fertig mit Fasern versehenen Blaskern vor dem Einlegen in die Produktionsform einem weiteren Verarbeitungsschritt zu unterwerfen. Beispiele hierfür sind Wärmebehandlungen, Trocknungsprozesse, usw.. Es besteht die Möglichkeit, die Hilfskörper mit einer Schicht zu versehen, die während dem Produktionsprozess die aufgelegten Fasern durchdringt und die Matrix oder zumindest einen Teil davon bilden.

Fasern werden auf dem Blaskern in der Regel als Halbzeug in Form von Trockenfasern oder vorgängig mit Harz getränkten Fasern, z.B. Prepreg (Preimpregnated Fibres) belegt oder umwickelt. Das beschriebene Verfahren eignet sich für die Verarbeitung von unterschiedlichen Fasertypen oder einer Kombination davon.

Je nach Anwendungsgebiet werden die Blaskerne bewusst kleiner (Untermass) oder mit einer von der angestrebten in einem definierten Mass abweichenden Geometrie bereitgestellt, so dass z.B. die Applikation der Fasern auf den Blaskernen und/oder das Einlegen desselben in die Kavität des Produktionswerkzeuges vereinfacht wird. Indem der Blaskern in der Produktionsform aufgeblasen wird, werden die Fasern durch den Blaskern gegen die Aussenwand der Kavität gepresst und das Teil erhält dadurch seine finale Geometrie. Beim RTM-Verfahren besteht die Möglichkeit, nach dem die Fasern und ein mit Untermass versehener Blaskern in die Produktionsform eingelegt wurde, Harz einzuleiten, bevor der Blaskern aufgeblasen wird. Dadurch wird erreicht, dass die Fasern einfacher vom Harz durchflossen werden. Durch das anschliessende, in einem Schritt oder mehrstufige Aufblasen des Blaskern, wird überschüssiges Harz durch dafür vorgesehene Auslasskanäle aus der Kavität der Produktionsform gepresst. Dadurch können hohle oder stark hinterschnittige Teile hoher Güte hergestellt werden.

Indem der Blaskern nur teilweise mit Fasern belegt wird, können auch offene Bauteile hergestellt werden. Die Produktionsform kann einen entsprechenden vereinfachten, d.h. das Bauteil nicht ganz umschliessenden Aufbau, aufweisen.

Ein erfindungsgemässes Verfahren ist im Anspruch 1 definiert.

Falls erforderlich, kann der Hilfskörper vor dem Aufbringen der Fasern beschichtet werden, derart, dass die Fasern nach dem Produktionsprozess fest am der Oberfläche des Hilfskörpers haften oder sich davon lösen lassen. Dies kann erreicht werden, indem der Hilfskörper mit einem Haftmittel, z.B. in Form von Klebstoff oder mit Trennmittel behandelt wird.

Falls erforderlich, können die Fasern auf der Aussenseite (d.h. der dem Hilfskörper gegenüberliegenden Seite) mit einem weiteren Hilfskörper, z.B. in Form einer Tiefziehen, Spritzgiessen oder Blasformen hergestellten thermoplastischen Folie versehen werden.

Ebenfalls besteht die Möglichkeit, gleichzeitig oder in mehreren Arbeitsschritten nacheinander mehrere mit Fasern ganz oder teilweise bedeckte Hilfskörper in einem oder mehreren Produktionswerkzeug miteinander zu verbinden oder aneinander anzupassen.

Das Produktionswerkzeug kann ein oder mehrteilig ausgestaltet sein, so dass der Hilfskörper und die eingebrachten Fasern während dem Produktionsprozess ganz oder nur teilweise umschlossen sind.

Druck auf das Laminat wird beim Aushärten durch den Innendruck (Luft) im Kern aufgebracht. Bei einem hohlen Bauteil besteht die Möglichkeit, dieses werkzeugfallend anzuordnen, so dass es gänzlich vom Werkzeug umgeben ist. Dies hat den Vorteil, dass nachträglich kein Konturbeschnitt notwendig ist.

Als Produktionswerkzeuge eignen sich besonders Werkzeuge mit Kavitäten aus Metall, z.B. Stahl oder Aluminium, die eine besonders hohe Oberflächenqualität und hohe Reproduktionsgenauigkeit ergeben. Je nach Anwendungsgebiet sind andere Materialien möglich.

In einem Anwendungsgebiet werden gute Resultate erzielt, indem der Betrieb eines Werkzeuges für die Durchführung eines erfindungsgemässen RTM-Verfahrens bei rund 90°C erfolgt. Die Aushärtezeit beträgt dabei ca. 30 Minuten. Je nach Geometrie und Aufbau, sowie der Art und Dicke der zu verarbeitenden Materialien können diese Werte abweichen. Bei Bedarf kann mittels einer nachgeschalteten Wärmebehandlung die Glastemperatur (Tg) erhöht werden.

Das Verfahren ermöglicht Fahrzeugchassis mit einem komplizierten, mehrzelligen, Aufbau in sehr kurzer Zeit und mit hoher Güte herzustellen. Es besteht die Möglichkeit, offene und geschlossene Strukturen in einem Arbeitsgang miteinander zu kombinieren. Mehrere Blaskerne werden miteinander kombiniert, um die Struktur aufzubauen. Ebenfalls besteht die Möglichkeit, einen Blaskern mit anderen Herstellverfahren zu kombinieren. Um ein optimales Resultat zu erzielen, können vorgefertigte Strukturteile aus Fasern oder anderen Materialien in die Produktionsform eingelegt werden. Die Produktionsform kann zu diesem Zweck Haltemittel z.B. in Form von Öffnungen oder Vorsprüngen aufweisen.

Grundsätzlich besteht die Möglichkeit weitere Teile in die Produktionsform einzulegen, die später Bestandteil des fertigen Faserverbundbauteils sind. Z.B. kann ein tragendes ein oder mehrzelliges Chassis eines Fahrzeuges oder Bestanteile davon aus einem oder mehreren Hilfskörpern aufgebaut werden. Weitere Bestandteile können im selben Arbeitsschritt wirkverbunden werden. Z.B. Beschläge oder Wabenstrukturen aus Metall oder einem anderen Wabenmaterial, aber auch Schäume aus Kunststoff oder Metall können eingelegt und ganz oder teilweise von Fasern umschlossen werden. Dadurch können hoch komplexe Teile mit einer Vielzahl von Funktionen sehr wirtschaftlich hergestellt werden.

Für Spezialanwendungen kann der Blaskern aus mehrere Schichten aufgebaut sein, die ihnen zugeordnete spezielle Aufgaben übernehmen. Indem z.B. eine innere Schicht sehr elastisch ausgebildet ist, so dass sie sich bei einer Entleerung zusammen zieht, besteht die Möglichkeit, Tanks zu realisieren, die im Bereich des Fluids kein Totvolumen aufweisen.

Der Hilfskörper kann bei Bedarf zur Vergrösserung des Volumens eine Öffnung zum Einbringen eines Fluids aufweisen. Alternativ oder in Ergänzung kann der Hilfskörper zur Vergrösserung des Volumens im Innern eine Treibladung aufweisen. Z.B. kann eine Flüssigkeit mit entsprechend niedrigem Siedepunkt eingebracht werden, die beim erreichen eines gewissen Temperaturniveaus verdampft und dadurch den Druck erhöht. Je nach Anwendungsgebiet weist der Hilfskörper eine Geometrie auf, die konstant oder im Wesentlichen ortsabhängig variabel 1% bis 20% kleiner ist als die Kavität der Produktionsform. Dadurch kann das Einbringen in die Produktionsform oder das Anbringen der Fasern erleichtert werden.

In den nachfolgenden Figuren sind Ausführungsbeispiele näher erläutert, die zwar nicht mehrere aus einer Folie hergestellte, geschlossene Hilfskörper zeigen, die über Kanäle miteinander wirkverbunden sind. Dennoch sollen die Ausführungsbeispiele das Verständnis der Erfindung erleichtern. Es zeigen schematisch und vereinfacht:
- Fig. 1: die Herstellung eines Blaskerns;
- Fig. 2: das Anbringen von Fasern an einem Blaskern;
- Fig. 3: das Einbringen eines mit Fasern belegten Blaskerns in eine Produktionsform;
- Fig. 4: eine Schnittdarstellung durch eine Produktionsform;

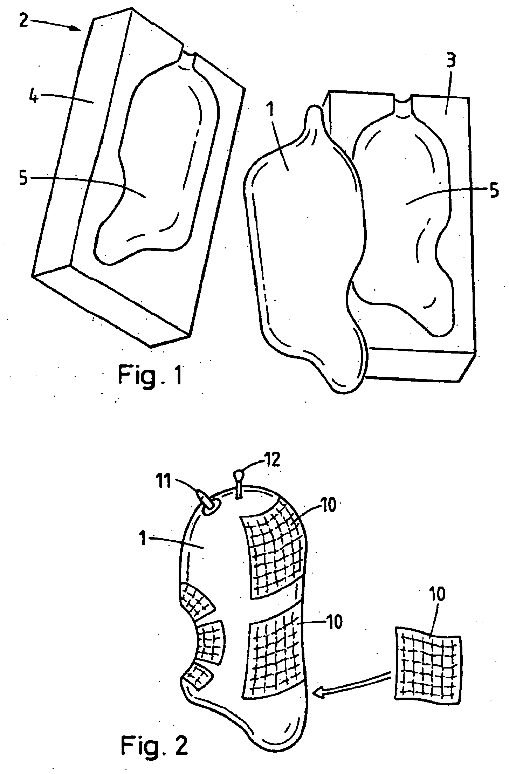

**Figur 1** zeigt schematisch und stark vereinfacht wie ein Blaskern 1 durch Blasformen (Extrusionsblasen) in einem Arbeitsgang in einem hier zweiteiligen Blasformwerkzeug 2 hergestellt wird. Das Blasformwerkzeug 2 weist ein Unterteil 3 und ein Oberteil 4 auf, die je eine Hälfte einer Kavität 5 aufweisen. Zunächst wird kontinuierlich oder auch diskontinuierlich ein Schlauch (nicht näher dargestellt) aus heissem, formbaren Kunststoff aus einem angeflanschten Werkzeug als Vorformling unter Hilfe der Schwerkraft senkrecht nach unten extrudiert. Die Materialstärke im Schlauch wird dabei entsprechend der Form des fertigen Werkstücks geregelt. Dann fährt ein Dorn (nicht näher dargestellt) von oben oder unten in den Schlauch ein. Das zu diesem Zeitpunkt noch geöffnete zweigeteilte Blasformwerk fährt dann zu und umhüllt den Schlauch mitsamt dem Dorn im Innern der Kavität 5.

Durch den Dorn wird dann Druckluft in den Schlauch gepresst, womit dieser aufgeblasen und an die Aussenkontur der Kavität im Innern des Blaswerkzeugs gepresst und abgekühlt wird. Der Kunststoff passt sich so der vorgegebenen Form an und wird fest. Durch Variation der Materialstärke im Schlauch lässt sich die Dicke des Kunststoffs im Fertigprodukt gezielt steuern.

Die Blaskerne werden je nach Anwendungsgebiet aus unterschiedlichen Materialien hergestellt. Unter anderem eignen sich folgende Materialien für das Blasformen: Polyolefine, vor allem Polyethylen (PE) und Polypropylen (PP); Plexiglas (PMMA); Polycarbonat (PC); Polyamid (PA); thermoplastisches Polyurethan; thermoplastische Elastomere (TPU).

Blaskerne können je nach Anwendungsgebiet auch auf andere Art und Weise und aus anderen Materialien oder Kombinationen davon hergestellt werden, z.B. in dem sie aus mehreren Spritzgiessteilen zusammengeschweisst oder geklebt werden. Ebenfalls besteht die Möglichkeit den Blaskern aus Gewebe herzustellen, das vorher oder nachher imprägniert oder beschichtet wird, damit es die erforderlichen Eigenschaften erhält. Das Gewebe kann durch Nähen, Kleben oder Verschweissen zusammengefügt werden.

**Figur 2** zeigt wie ein Blaskern 1 mit Fasern 10 belegt wird. Alternativ oder ergänzend kann der Blaskern 1 auch mit Fasern umwickelt werden. Ebenfalls besteht die Möglichkeit, mehr als eine Faserart zu verarbeiten, resp. auf dem Blaskern anzubringen. Im Prinzip lassen sich alle bekannten Fasern gemäss dem hier beschriebenen Verfahren verarbeiten. Ebenfalls besteht die Möglichkeit, vorgefertigte Teile oder Baugruppen zu integrieren oder Beschriftungen anzubringen.

Der Blaskern 1 ist mit einem Ventil 11 versehen und dicht verschlossen. Für das Anbringen der Fasern 10 wurde Blaskern 1 hier an einer Aufhängevorrichtung 12 befestigt. Andere Halterungen sind möglich.

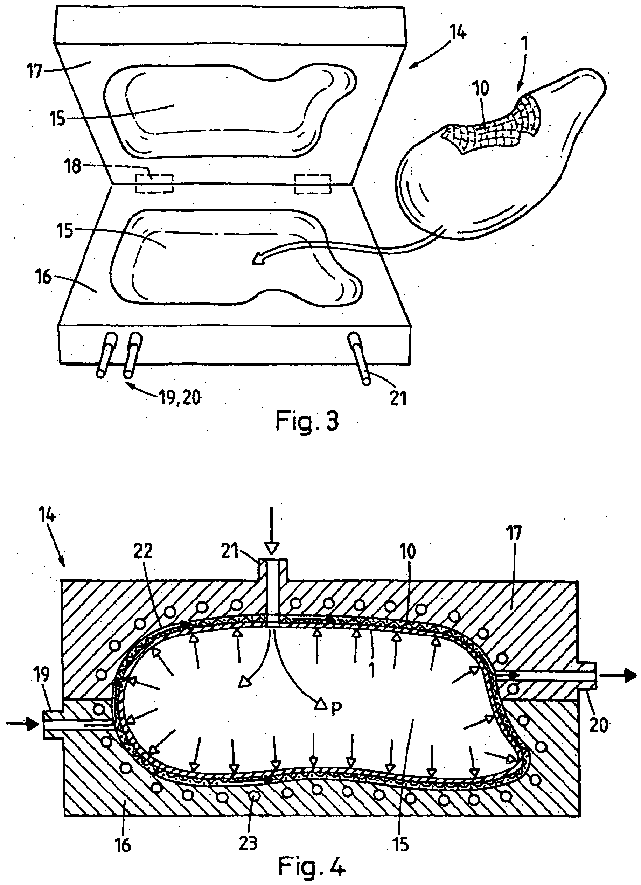

**Figur 3** zeigt eine Produktionsform 14 in geöffneten Zustand mit einer Kavität 15 im Innern in die ein mit Fasern 10 versehener Blaskern 1 eingelegt wird. Die gezeigte Produktionsform eignet sich für das erfindungsgemässe RTM-Verfahren und besteht hier aus einem Unterteil 16 und einem Oberteil 17, die über eine Scharnierverbindung 18 geöffnet und geschlossen werden können. Die Produktionsform 14 weist ein oder mehrere erste und zweite Anschlüsse 19, 20 für die Zu- und Abfuhr von Harz auf. Ebenfalls ist ein oder mehrere dritte Anschlüsse 21 vorhanden, mittels denen ein Blaskern 1 bei geschlossener Produktionsform im Innern mit Pressluft oder einem anderen Fluid aufgeblasen werden kann. Bei einem RTM-Prozess ist die Produktionsform in der Regel geheizt, damit die Reaktion des Harzes beschleunigt wird. Zu diesem Zweck weist die Produktionsform im Innern Mittel zum Heizen und Anschlüsse zur Energiezufuhr auf (nicht näher dargestellt).

Die Kavität 15 weist hier die Geometrie des endgültigen Bauteils auf. Bei Bedarf können Hilfsmittel z.B. in Form von Zwischenfolien oder Schichten, die später am Bauteil verbleiben oder wieder von diesem entfernt werden. Gute Resultate werden mit dem in der WO2006/122987 beschriebenen Verfahren derselben Anmelderin erzielt Eine Folie wird dabei vorgängig durch Tiefziehen, Blasformen oder Spritzgiessen in eine definierte Geometrie gebracht und dient als Zwischenschicht oder Hilfsschicht, die separat in die Kavität 15 der Produktionsform 14 eingelegt wird bevor der Blaskern 1 in diese eingelegt wird. Bei Bedarf kann diese Zwischenschicht alternativ oder ergänzend ebenfalls mit Fasern belegt werden (nicht näher dargestellt).

In der gezeigten Ausführungsform weist der Blaskern 1 eine Geometrie auf, die in einem definierten Mass von der Geometrie der Kavität 15, respektive des fertigen Bauteils (nicht dargestellt), abweicht. Dies erleichtert das Anbringen der Fasern, respektive das Einlegen in die Kavität 15. Erst durch Aufblasen des Blaskernes 1 bei geschlossener Produktionsform werden die Fasern gegen die Wand der Kavität 15 gepresst und erreichen so ihre endgültige Geometrie (vgl. hierzu Figur 4).

**Figur 4** zeigt einen Schnitt durch eine Produktionsform 14 gemäss Figur 3 in geschlossenem Zustand. Im Innern der Kavität 15 befinden sich eine Blasform 1, die durch einen Druckluftanschluss 21 von aussen mit Druckluft aufgeblasen wird. Fasern 10 eines Bauteils werden dadurch kontrolliert gegen die Wand 22 der Kavität 15 gepresst. Je nach Anwendungsgebiet erfolgt das Aufblasen des Blaskerns bevor während oder nachdem Harz durch die entsprechenden Anschlüsse 19, 20 durch die Fasern 10 geleitet wurde. Der Druck im Innern des Blaskerns wird je nach Anwendung eingestellt und in einer oder mehreren Stufen aufgebracht. Bezüglich der Prozessparameter ist eine vergleichsweise grosse Bandbreite zu finden; z.B. wird ein Bauteil je nach Geometrie und Injektionszeit zwischen 80°C und 120°C ausgehärtet. In einem Anwendungsbeispiel werden Blaskerne beim Injizieren mit 0 bis 8 bar Überdruck befüllt. Beim Aushärten und Auspressen von Harz wird der Druck auf 6 bis 12 bar erhöht. Durch Variation des Drucks und/oder der Temperatur entsprechend einem vordefinierten Profil durch stufenweises oder kontinuierliches Erhöhen und/oder Verkleinern kann die Durchtränkung der Fasern mit Harz optimiert werden. Anstelle des RTM-Verfahrens können auch Prepregs verwendet werden. Die Produktionsform 14 wird entsprechend dimensioniert. Um gänzlich geschlossene Körper zu erzielen, kann der Blaskern vor dem Einbringen in die Produktionsform mit einem gewissen Gasvolumen befüllt und dann verschlossen werden. Nach dem Einbringen in die Produktionsform wird der Aussenbereich vakuumiert. Dadurch wird erreicht, dass sich der Blaskern im Innern der Kavität 15 ausdehnt und die Fasern gegen die Aussenwand 22 gepresst werden. Unterstützend wirkt sich eine erhöhte Werkzeugtemperatur aus.

### BEZUGSZEICHENLISTE

- 1: Blaskern
- 2: Blasformwerkzeug
- 3: Unterteil
- 4: Oberteil
- 5: Kavität
- 10: Fasern
- 11: Ventil
- 12: Aufhängevorrichtung
- 14: Produktionsform
- 15: Kavität
- 16: Unterteil Produktionsform
- 17: Obertei Produktionsform
- 18: Scharnierverbindung
- 19: Anschluss für Harzzufuhr
- 20: Anschluss für Harzabfuhr
- 21: Anschluss zum Befüllen des Blaskerns
- 22: Innenwand der Kavität
- 23: Heizung

## Patentansprüche

1. Verfahren zur Herstellung eines mehrzelligen Fahrzeugchassis aus Faserverbundwerkstoff mit folgenden Verfahrensschritten:
a) Bereitstellen von mehreren aus einer Folie hergestellten, geschlossenen Hilfskörpern, die über Kanäle miteinander wirkverbunden sind;
b) Anbringen von Fasern (10) auf den mehreren Hilfskörpern ausserhalb einer Produktionsform (2, 3; 14);
c) Gleichzeitiges Einbringen der mehreren Hilfskörper mit den Fasern (10) in eine Kavität (5) einer Produktionsform (2, 3; 14);
d) Schliessen der Produktionsform (2, 3; 14) derart, dass die Hilfskörper und die Fasern (10) im Innern der Kavität (5) eingeschlossen sind;
e) Erzeugen einer Druckdifferenz zwischen dem Innern der miteinander wirkverbundenen Hilfskörper und der Umgebung, derart, dass sich das Volumen der Hilfskörper vergrössert, derart, dass die Fasern (10) mittels den Hilfskörpern gegen eine Innenwand (22) der Kavität (5) gepresst werden;
f) Verkleben der Fasern (10);
g) Entnahme des Bauteils aus der Produktionsform (2, 3; 14).

2. Verfahren gemäss Patentanspruch 1, **dadurch gekennzeichnet, dass** weitere vorgängig hergestellte Teile in die Produktionsform (2, 3; 14) eingelegt werden, die in der Produktionsform mit den Fasern (10) und/oder dem Hilfskörper wirkverbunden werden.

3. Verfahren gemäss Patentanspruch 2, **dadurch gekennzeichnet, dass** die vorgängig hergestellten Teile in dafür vorgesehene Haltemittel (12) in der Produktionsform (2, 3; 14) eingelegt werden.

4. Verfahren gemäss Patentanspruch 2 oder 3, **dadurch gekennzeichnet, dass** die weiteren Teile Trennelemente und/oder Träger und/oder Beschläge und/oder Waben und/oder Schäume und/oder Bleche und/oder Folien mit Beschriftungen sind.

5. Verfahren gemäss einem der vorangehenden Patentansprüche, **dadurch gekennzeichnet, dass** die Hilfskörper zur Vergrösserung des Volumens eine Öffnung (11) zum Einbringen eines Fluids aufweisen oder dass die Hilfskörper zur Vergrösserung des Volumens im Innern eine Treibladung aufweisen.

6. Verfahren gemäss einem der vorangehenden Patentansprüche, **dadurch gekennzeichnet, dass** die Hilfskörper eine Geometrie aufweisen, die konstant oder variabel 1% bis 20% kleiner ist als die Geometrie der Kavität (15) der Produktionsform (2, 3; 14).

7. Verfahren gemäss einem der vorangehenden Patentansprüche, **dadurch gekennzeichnet, dass** die Fasern (10) in Form eines trockenen Gewebes und/oder in Form von Endlosfasern durch Umwickeln und/oder in Form von Prepregs aufgebracht werden.

8. Verfahren gemäss einem der vorangehenden Patentansprüche, **dadurch gekennzeichnet, dass** die Fasern (10) mittels RTM miteinander verklebt werden.

9. Verfahren gemäss einem der vorangehenden Patentansprüche, **dadurch gekennzeichnet, dass** die Hilfskörper einen mehrlagigen Aufbau aufweisen.

10. Verfahren gemäss einem der vorangehenden Patentansprüche, **dadurch gekennzeichnet, dass** die Hilfskörper im Innern des fertigen Bauteils verbleiben oder nach dem Verkleben der Fasern (10) durch eine Öffnung im Bauteil entnommen werden.

11. Mehrzelliges Fahrzeugchassis aus Faserverbundwerkstoff hergestellt gemäss dem Verfahren von zumindest einem der vorangehenden Patentansprüche.

12. Mehrzelliges Fahrzeugchassis aus Faserverbundwerkstoff gemäss Patentanspruch 11, **dadurch gekennzeichnet, dass** das Fahrzeugchassis bei der Herstellung wirkverbundene Trennelemente und/oder Träger und/oder Beschläge und/oder Waben und/oder Schäume und/oder Bleche und/oder Folien mit Beschriftungen aufweist.

13. Mehrzelliges Fahrzeugchassis aus Faserverbundwerkstoff gemäss Patentanspruch 11 oder 12, **dadurch gekennzeichnet, dass** das Fahrzeugchassis eine Öffnung zur Entnahme der Hilfskörper aufweist.

## Claims

1. Method for producing a multicellular vehicle chassis made of fibre composite material, comprising the following method steps:
a) a plurality of closed auxiliary bodies which are produced from a film and are operatively connected to one another via channels are provided;
b) fibres (10) are applied to the plurality of auxiliary bodies outside a production mould (2, 3; 14);
c) the plurality of auxiliary bodies are introduced into a cavity (5) of a production mould (2, 3; 14) at the same time as the fibres (10);
d) the production mould (2, 3; 14) is closed such that the auxiliary bodies and the fibres (10) are enclosed in the interior of the cavity (5);
e) a pressure difference is generated between the interior of the auxiliary bodies, which are operatively connected to one another, and the surroundings such that the volume of the auxiliary bodies increases such that the fibres (10) are pressed against an inner wall (22) of the cavity (5) by means of the auxiliary bodies;
f) the fibres (10) are bonded together;
g) the component is removed from the production mould (2, 3; 14).

2. Method according to Patent Claim 1, **characterized in that** further parts produced in advance are placed into the production mould (2, 3; 14) and are operatively connected to the fibres (10) and/or the auxiliary body in the production mould.

3. Method according to Patent Claim 2, **characterized in that** the parts produced in advance are placed into holding means (12) intended therefor in the production mould (2, 3; 14).

4. Method according to Patent Claim 2 or 3, **characterized in that** the further parts are separating elements and/or carriers and/or fittings and/or honeycomb structures and/or foams and/or metal sheets and/or films with inscriptions.

5. Method according to one of the preceding patent claims, **characterized in that** the auxiliary bodies have an opening (11) for the introduction of a fluid to increase the volume or **in that** the auxiliary bodies have a propellant to increase the internal volume.

6. Method according to one of the preceding patent claims, **characterized in that** the auxiliary bodies have a geometry which is constantly or variably 1% to 20% smaller than the geometry of the cavity (15) of the production mould (2, 3; 14).

7. Method according to one of the preceding patent claims, **characterized in that** the fibres (10) are applied in the form of a dry woven fabric and/or in the form of continuous fibres by wrapping and/or in the form of prepregs.

8. Method according to one of the preceding patent claims, **characterized in that** the fibres (10) are bonded to one another by means of RTM.

9. Method according to one of the preceding patent claims, **characterized in that** the auxiliary bodies have a multilayer structure.

10. Method according to one of the preceding patent claims, **characterized in that** the auxiliary bodies remain inside the finished component or are removed through an opening in the component after the fibres (10) have been bonded together.

11. Multicellular vehicle chassis made of fibre composite material which is produced by the method according to at least one of the preceding patent claims.

12. Multicellular vehicle chassis made of fibre composite material according to Patent Claim 11, **characterized in that** the vehicle chassis has separating elements and/or carriers and/or fittings and/or honeycomb structures and/or foams and/or metal sheets and/or films with inscriptions which are operatively connected during production.

13. Multicellular vehicle chassis made of fibre composite material according to Patent Claim 11 or 12, **characterized in that** the vehicle chassis has an opening for removing the auxiliary bodies.

## Revendications

1. Procédé de fabrication d'un châssis multicellulaire de véhicule en un matériau composite de fibres, le procédé comportant les étapes suivantes :
a) prévoir plusieurs corps auxiliaires fermés réalisés à partir d'un film et coopérant les uns avec les autres par l'intermédiaire de canaux,
b) placement de fibres (10) sur les différents corps auxiliaires à l'extérieur d'un moule de production (2, 3; 14),
c) amenée simultanée de différents corps auxiliaires et des fibres (10) dans la cavité (5) d'un moule de production (2, 3; 14),
d) fermeture du moule de production (2, 3; 14) de telle sorte que les corps auxiliaires et les fibres (10) soient enfermés à l'intérieur de la cavité (5),
e) établissement d'une différence de pression entre l'intérieur des corps auxiliaires coopérant mutuellement et l'environnement de telle sorte que le volume des corps auxiliaires augmente et que les fibres (10) soient repoussées au moyen des corps auxiliaires contre une paroi intérieure (22) de la cavité (5),
f) collage des fibres (10) et
g) enlèvement du composant hors du moule de production (2, 3; 14).

2. Procédé selon la revendication 1, **caractérisé en ce que** d'autres pièces fabriquées préalablement sont placées dans le moule de production (2, 3; 14) et coopèrent dans le moule de production avec les fibres (10) et/ou avec le corps auxiliaire.

3. Procédé selon la revendication 2, **caractérisé en ce que** des pièces fabriquées précédemment sont placées dans le moule de production (2, 3; 14) dans des moyens de maintien (12) prévus dans ce but.

4. Procédé selon les revendications 2 ou 3, **caractérisé en ce que** les autres pièces sont des éléments de séparation et/ou des supports et/ou des ferrures et/ou des nids d'abeilles et/ou des mousses et/ou des tôles et/ou des films dotés d'inscriptions.

5. Procédé selon l'une des revendications précédentes, **caractérisé en ce que** pour permettre d'augmenter leur volume, les corps auxiliaires présentent une ouverture (11) qui permet d'apporter un fluide ou **en ce que** les corps auxiliaires présentent à l'intérieur une charge propulsive qui permet d'augmenter le volume.

6. Procédé selon l'une des revendications précédentes, **caractérisé en ce que** de manière constante ou variable, la géométrie des corps auxiliaires est inférieure de 1 % à 20 % à la géométrie de la cavité (15) du moule de production (2, 3; 14).

7. Procédé selon l'une des revendications précédentes, **caractérisé en ce que** les fibres (10) sont appliquées sous la forme d'un tissu sec et/ou sous la forme de fibres sans fin par enroulement et/ou sous la forme de pré-imprégnés.

8. Procédé selon l'une des revendications précédentes, **caractérisé en ce que** les fibres (10) sont collées les unes aux autres au moyen de RTM.

9. Procédé selon l'une des revendications précédentes, **caractérisé en ce que** les corps auxiliaires présentent une structure multicouche.

10. Procédé selon l'une des revendications précédentes, **caractérisé en ce qu'**après collage des fibres (10), les corps auxiliaires restent à l'intérieur du composant terminé ou sont enlevés du composant par une ouverture.

11. Châssis multicellulaire pour véhicule, en matériau composite de fibres et fabriqué selon le procédé défini par au moins l'une des revendications précédentes.

12. Châssis multicellulaire pour véhicule selon la revendication 11, **caractérisé en ce que** le châssis du véhicule présente des éléments de séparation et/ou des supports et/ou des ferrures et/ou des nids d'abeilles et/ou des mousses et/ou des tôles et/ou des films dotés d'inscriptions, qui coopèrent lors de la fabrication.

13. Châssis multicellulaire pour véhicule selon les revendications 11 ou 12, **caractérisé en ce que** le châssis pour véhicule présente une ouverture d'enlèvement des corps auxiliaires.
